# EUROPÄISCHE PATENTANMELDUNG

(11) **EP 0 591 916 A2**
(43) Veröffentlichungstag der Anmeldung: **13.04.1994**
(21) Anmeldenummer: 93116065.9
(22) Anmeldetag: 05.10.1993
(51) Int. Cl.: C09D 11/02, C09D 11/10, B41M 7/00

(54) **Tintendruckverfahren und Tintendruckfarbe für Offsetdruckvorlage**

(30) Priorität: 07.10.1992 AU PL5139/92
(71) Anmelder: MAN Roland Druckmaschinen AG, 63012 Offenbach (DE)
(72) Erfinder: Treleaven, Richard John, Toorak Gardens, South Australia 5065 (AU)
(74) Vertreter: Schober, Stefan

(57) **Zusammenfassung**

Eine Druckfarbenzusammensetzung auf Wasserbasis, welche durch Anwendung von Wärme vernetzbare Polymere enthält, wobei die sich ergebende vernetzte Ablagerung verwendet wird, um eine zusammenhängende Matrix zu erzeugen, die gegen saures Feuchtwasser eines Offsetdruckverfahrens beständig ist. Die vernetzte Zusammensetzung umfaßt ein erstes, ein zyklisches Anhydrid oder dessen Derivat enthaltendes Polymer und ein zweites, Hydroxylfunktionalität enthaltendes Polymer. Das zyklische Anhydrid kann Styrolmaleinanhydrid oder ein Derivat davon, oder Methylvinylether/Maleinanhydrid oder ein Derivat davon sein. Das zweite, hydroxylhaltige Polymer kann ein Polyäthylen- oder Polypropylengycol, ein hydroxylalkyliertes Polyäthylenimin, ein Polyvinylalkohol sein, oder das hydroxylhaltige Polymer kann ein Acrylpolymer sein, das zumindest ein hydroxysubstitutiertes Acrylat- oder Methacrylatmonomer und ein Acrylsäure- oder Methacrylsäuremonomer umfaßt.

## Beschreibung

Die Erfindung betrifft wäßrige Zusammensetzungen zum Gebrauch als Druckfarbe im Tintendruckverfahren, zum Zweck der Herstellung einer Lithographievorlage.

Das Tintendruckverfahren ist zum Zweck der Herstellung einer direkten Lithographievorlage für Offsetdruck untersucht worden. Angesichts der bedeutenden Vorteile, die durch die Tintendrucktechnik entstehen, weil sie es ermöglicht, direkt auf eine Druckplatte zu schreiben, scheint diese Technik nicht ausreichend genutzt zu sein. Eine Erklärung für diese mangelnde Aufmerksamkeit wird nachstehend geboten.

Druckfarbenformulierungen auf Lösungsmittelbasis scheinen sich hinsichtlich Lithographiekontrast und Lauflänge gut zu eignen, besonders wenn das Druckbild oder die Druckvorlage durch Polymerisierung von Monomeren hergestellt wird, wie es z.B. bei US-PS 4 003 312 der Fall ist. Umweltsanliegen machen diese Verfahrensweise aber weit weniger wünschenswert als eine Alternative auf Wasserbasis.

Die Druckereibranche stellt in Bezug auf Auflösung sehr strenge Forderungen. Die am wenigsten anspruchsvolle Forderung bezieht sich auf eine Punktgröße von 40µ für den Zeitungsdruck. Diese Größe ist schwer zu erreichen aufgrund einer Kombination der Größe der Tröpfchen, die der Tintendrucker erzeugt, und der Ausbreitung dieser Tröpfchen bei Aufprall auf die Druckplatte. Der letztere Punkt wird noch stärker betont, wenn eine Druckfarbe auf Wasserbasis in Verbindung mit einer hydrophilen Druckplatte verwendet wird.

Die wäßrigen Druckfarben, die bis jetzt vorgeschlagen wurden, erzeugen die Druckvorlage im wesentlichen durch die Ablagerung von in Alkali löslichen Polymeren, wobei Wasserbeständigkeit nachträglich durch Verdampfen einer flüchtigen Basis erreicht wird, wie es in US-PS 3 903 034 beschrieben wird. Mit solchen Formulierungen können jedoch nur relativ kurze Drucklauflängen erzeugt werden. Obwohl Druckvorlagen mit kurzen Lauflängen auf dem Markt auch einen Platz haben ist dies eine schwerwiegende Einschränkung da, bedingt durch schlechte Auflösung, eine hohe Bildqualität nicht erzeugt werden kann.

Es ist demnach Aufgabe der vorliegenden Erfindung, Druckfarbenzusammensetzungen auf Wasserbasis zur Verfügung zu stellen, welche die Fähigkeit besitzen, eine Druckvorlage mit bedeutenden Drucklauflänge auf einer hydrophilen Druckplatte zu erzeugen.

Es ist weiterhin eine Aufgabe der Erfindung, daß die Kombination der Druckfarbenzusammensetzung und des Bildentwicklungsverfahrens eine zufriedenstellende Auflösung bereitstellen soll. Besonders sollte die Punktgröße der erzeugten Druckvorlage einen Durchmesser von 40µ nicht übersteigen.

Eine weitere Aufgabe besteht darin, eine Zusammensetzung zur Verfügung zu stellen, die in Bezug auf den Tintendrucker gute Funktionsleistung sicherstellt. Besonders erfordert dies, daß die Zusammensetzung gute Tropfenstabilität besitzt, und auch nicht die Tintendüse verstopft.

Die vorgenannten Aufgaben werden durch die vorliegende Erfindung gelöst, welche eine Druckfarbenzusammensetzung auf Wasserbasis vorsieht, welche vernetzbare Polymere enthält, wobei die sich daraus ergebende Ablagerung verwendet wird, eine zusammenhängende Matrix zu erzeugen, die gegen saures Feuchtwasser eines Offsetdruckverfahrens beständig ist.

Besonders vorteilhaft ist, wenn die Vernetzung durch einen Aushärteprozeß, der entweder Wärmeeinstrahlung oder Warmeübertragung beinhaltet, zu Ende geführt wird. Es ist noch vorteilhafter, wenn der Aushärteprozeß bei einer Temperatur im Bereich zwischen ca. 70 bis 180° C durchgeführt wird, damit eine Aushärtung erreicht wird, welche eine Matrix liefert, die eine bedeutende lithographische Drucklauflänge sicherstellt.

Geeignete vernetzbare Polymere sind solche, die auf solche Weise in eine Tintendruckzusammensetzung formuliert werden können, daß ihre gemeinsame Reaktion leicht steuerbar ist und insbesondere nur wie nötig ablaufen darf. Es wird bevorzugt, wenn diese Polymeren ein oder mehrere aus Gruppe A beinhalten, wie z.B. polymere zyklische Anhydride oder deren Derivate, und ein oder mehrere aus Gruppe B, welche Polymere mit Hydroxylfunktionalität umfaßt.

Die benötigte Auflösung wird erreicht, wenn eine ausreichend kleine Druckfarbendüse, nämlich 10µ, und ein entsprechendes Druckvorlagensubstrat verwendet werden. Zusätzlich, und je nach Beschaffenheit der Oberfläche dieses Substrats, kann die gedruckte Tropfengröße weiter gesteuert werden, indem die Ausbreitung der Tröpfchen durch Vorwärmen des Substrats vor dem Aufbringen des Druckbildes beschränkt wird. Vorteilhaft wird ein solches Vorwärmeverfahren im Temperaturbereich von ca. 60° C bis ca. 110° C durchgeführt.

Die Vernetzungsreaktion kann insofern gesteuert werden, daß die Reaktion nur abläuft, nachdem die Vorlage auf das Substrat aufgebracht worden ist. Das ist von Bedeutung, da eine vorzeitige Reaktion wesentliche Unbeständigkeit beim Spritzen verursachen und im extremen Fall zu Verstopfung der Düse führen könnte.

In einem weiteren Ausführungsbeispiel der Erfindung wird eine Druckfarbenzusammensetzung auf Wasserbasis für das Tintendruckverfahren bereitgestellt, die zur Erzeugung einer Ablagerung einer Offsetdruckvorlage verwendet wird, wobei die Zusammensetzung ein erstes, ein zyklisches Anhydrid oder dessen Derivat enthaltendes Polymer und ein zweites, Hydroxylfunktionalität enthaltendes Polymer umfaßt, und das erste und zweite Polymer vernetzbar sind.

Die verschiedenen Neuigkeitseigenschaften, durch welche die Erfindung gekennzeichnet ist, werden in den Patentansprüchen , die der Offenbarung anliegen und einen Bestandteil dieser Offenbarung darstellen, besonders hervorgehoben. Um ein besseres Verständnis der Erfindung, deren betrieblichen Vorteile und der spezifischen Ziele, die durch deren Gebrauch erreicht werden, zu erhalten, ist auf die Beschreibung, mit denen bevorzugte Ausführungsbeispiele der Erfindung beschrieben werden, Bezug zu nehmen.

In einem bevorzugten Ausführungsbeispiel der Erfindung beinhaltet das Verfahren den Gebrauch des kontinuierlichen Tintendruckverfahrens, insbesondere der Hertz-Tintendrucktechnik, bei der eine Düse mit einem, Durchmesser von 10µ spezifisch vorgesehen ist. Tröpfchen werden auf einer hydrophilen Vorlage wie z.B. einer Metallplatte oder einem Keramiksubstrat abgelagert. Die Ablagerung wird bei bestimmter Temperatur und für bestimmte Zeit erhitzt um eine Vernetzung der Ablagerung zu erzeugen. Die gebildete Vorlage findet dann in einer Offsetdruckmaschine Verwendung, um eine bedeutende Menge von Abzügen zu erzeugen.

Die erforderliche Auflösung wird nicht nur durch den Gebrauch einer 10µ Tintendruckdüse sondern auch durch die Auswahl eines geeigneten Offsetvorlagematerials erreicht. Ein Keramiksubstrat wie z.B. Al₂O₃ oder ZrSiO₄, bei dem die Oberfläche leicht strukturiert und möglicherweise auch durch begrenzte Porosität gekennzeichnet ist, hat sich als besonders geeignet erwiesen. Die stark hydrophile Beschaffenheit und die verhältnismäßige fehlende Oberflächenstruktur von herkömmlichen eloxierten Druckplatten aus Aluminium verursachen ein Ausbreiten der Druckfarbentröpfchen bis zu einer Größe, die für gute Auflösung nicht geeignet ist.

Dieses Ausbreiten wird jedoch minimiert, indem die Platte unmittelbar vor dem Aufbringen der Druckvorlage auf eine Temperatur zwischen ca. 60° C und ca. 110° C vorgewärmt wird. Dieser zusätzliche Verfahrensschritt schränkt das Ausbreiten der Tröpfchen ein, indem die Verflüchtigungsrate der flüchtigen Bestandteile gesteigert und die Vernetzungsfunktion eingeleitet wird.

Die aufgebrachte Druckvorlage kann schließlich mit einem Aushärteverfahren vernetzt werden, bei dem Wärme bei einer Temperatur im Bereich zwischen a. 70° C und ca. 180° C zur Anwendung kommt. Geeignete thermische Verfahren umfassen Wärmeeinstrahlung von Infrarotlampen, Wärmekonvektion, wie sie in einem Ofen stattfindet, und Warmeübertragung, wie sie beim Induktionsverfahren entsteht. Vorteilhaft ist das Induktionsverfahren, da es mit einer Vorwärmung des Substrats beginnt, wodurch dann die Ablagerung gewärmt wird. Die Aushärtung beginnt also an der Kontaktfläche zwischen Ablagerung und Substrat und läuft durch die Ablagerung durch bis zu deren Oberfläche ab, wodurch eine vollständigere Matrix erzeugt wird. Dieses Verfahren ist besonders vorteilhaft, wenn das verwendete Substrat eine Metallplatte ist, und steht mit den Infrarotlampen- und Ofenverfahren in Kontrast, da diese zu etwas weniger wirksamen Aushärtung führen können, da die Aushärtung dazu nelgt, an der Oberfläche der Ablagerung einzusetzen.

Die vernetzbaren Polymere, die für dieses Verfahren geeignet sind, können ein oder mehrere aus einer Gruppe A beinhalten, welche solche Polymere umfaßt, die eine Anhydridgruppe oder eine modifizierte Anhydridgruppe enthalten und entweder in Wasser oder einem wäßrigen alkalischen Träger löslich sind, sowie ein oder mehrere aus einer Gruppe B, welche Polymere umfaßt, die Hydroxylfunktionalität enthalten.

Die Polymergruppe A besteht aus Polymeren und Copolymeren, die Anhydridgruppen oder deren Modifikationen enthalten - geeignete Beispiele sind u.a. Styrolmaleinanhydrid (SMA); Styrolmaleinanhydriddinatrium und halb Amid-/halb Ammoniumsalze; Styrolmaleinanhydrid mit teilweise verestertem Anydrid, wobei die Veresterung mit einein niederen Alkohol wie z.B. Methanol, Äthanol, n-Propanol, Isopropanol, n-Butanol, durchgeführt wurde; Methylvinyäther/Maleinanhydrid; und Methylvinyläther/Maleinanhydrid mit teilweise veresterter Anhydridgruppe, wobei die Veresterung mit einem niederen Alkohol wie z.B. Methanol, Äthanol, n-Propanol, Isopropanol oder n-Butanol durchgeführt wurde. Styrolmaleinanhydrid mit teilweise mit einem niederen Alkohol veresterten Anydrid, wie vorstehend aufgesagt, z.B. Scripset 550 von Monsanto Chemical Co., wird besonders bevorzugt. Bevorzugte Bereiche von teilweise verestertem SMA-Polymer der Gruppe A liegen zwischen ca. 0,2 und ca. 0,8 Gew.-%.

In abnehmender Reihenfolge der Bevorzugung werden auch SMA, SMA halb Amid-/halb Ammoniumsalz und SMA Dinatriumsalz bevorzugt, in einem Bereich zwischen ca. 0,2 und ca. 0,5 Gew.-%. Der bevorzugte Bereich von Methylvinyläther/Maleinanhydrid liegt zwischen ca. 0,1 und ca. 0,5 Gew.-%.

Die Polymergruppe B umfaßt Polymere oder Copolymere, die Hydroxylfunktionalität enthalten, und geeignete Beispiele sind u.a. Polymere wie z.B. Polyäthylenglycol, Polypropylenglycol, hydroxyäthyliertes Polyäthylenimin, hydroxypropyliertes Polyäthylenimin, ganz und teilweise hydrolysierter Polyvinylalkohol. Geeignete Polymere umfassen solche, die Acrylmonomere enthalten, wobei das hydroxyltragende Monomer Hydroxyäthylacrylat, Hydroxyäthylmethacrylat, Hydroxypropylacrylat, Hydroxypropylmethacrylat, Hydroxybutylacrylat, Hydroxybutylmethacrylat, Glyeroldiacrylat, Glyceroldimethacrylat, Glycerolmethacrylatacrylat sein kann, und wobei das besagte Polymer zumindest mit Acrylsäure- oder Methacrylsäuremonomer polymerisiert wird.

Hydroxyltragende Acrylcopolymere, z.B. Acrysol 162, oder hyrdoxyäthyliertes Polyäthylenimin, z.B. HEPEI 110, oder eine Mischung dieser, werden besonders bevorzugt und werden innerhalb des bevorzugten Bereichs von ca. 0,5 bis ca. 5 Gew.-% verwendet. In abnehmender Reihenfolge der Bevorzugang wird hydroxypropyliertes Polyäthylenimin in einem Bereich von ca. 0,5 bis ca. 5 Gew.% bevorzugt; Polyäthylenglycol und Polygropylenglycol werden im Bereich von ca. 0,1 bis ca. 3 Gew.-% bevorzugt, während Polyvinylalkohol im Bereich zwischen ca. 0,2 und 0,7 Gew.-% bevorzugt wird. Es versteht sich, daß die oben angegebenen Prozentbereiche sich zum großen Teil aus der Forderung der geringen Viskosität (bis ca. 2mPa.s), die bei den in dem bevorzugten Ausführungsbeispiel verwendeten Hertz-Tintendrucken besteht, ergeben. Demnach verstellt es sich auch, daß die vorliegende Erfindung in Verbindung mit anderen Tintendruckgeräten, bei denen die Druckfarbenviskosität nicht so begrenzt ist, in anderen Bereichen verwendet werden kann.

Formulierungen, die auf einer flüchtigen Basis beruhen, kann ein Stabilisierungsmittel hinzugegeben werden, um zu verhindern daß die Druckfarbe während Ausfallzeiten an der Düsenspitze eine Kruste bildet. Geeignete Stoffe für diesen Zweck umfassen Triäthanolamin, Dimethylaminoäthanol, Methyldiäthanolamin und N,N'-Dimethylpiperzin im bevorzugten Bereich von ca. 0 bis 0,7 Gew.-%.

Einer Druckfarbenzusammensetzung für das Tintendruckverfahren kann auch ein Leitfähigkeitsbeeinflussungsmittel und ein Bakterizid beinhalten. Geeignete Leitfähigkeitsbeinsflussungsmittel umfassen NaCl, LiCl, LiNO₃, NH₄Cl, Tetramethylammoniumchlorid und Tetraäthylammoniumchlorid in einem bevorzugten Bereich von ca. 0,1 bis ca. 0,8 Gew.-%. Geeignete Bakterizide sind u.a. Na Omadine von der Firma Olin Chemicals, Neosept 95 von der Firma Tenneco Chemicals und Dowicil 75 von der Firma Dow Chemicals, in einem bevorzugten Bereich von ca. 0,1 bis ca. 0,5 Gew.-%.

Obwohl ein Färbungsmittel wie z.B. ein Farbstoff in die Formulierung mit aufgenommen werden kann, ist es kein notwendiger Bestandteil, da die vernetzbaren Polymere allein für die Herstellung der Druckvorlage wesentlich sind. Geeignete Farbstoffe umfassen jedoch die der Azogruppe, einschließlich Monazo, Disazo, Triazo und Polyazo; die Triarylmethangruppe und die Phthalocyanine. Spezifisch gesagt sind geeignete Farbstoffe u.a. Direkt Black 19, Direct Black 38, Direct Black 168, Acid Red 52, Direct Blue 86, Direct Blue 199, Acid Blue 9 and Acid Violet 19. Bevorzugte Bereiche liegen zwischen 0 und ca. 10 Gew.-%.

Die Erfindung wird mit folgenden Beispielen weiter erläutert, ist aber nicht auf diese beschränkt. Alle Bestandteilmengen sind als Gewichtsprozent angegeben.

### Beispiel 1:

| | |
|---|---|
| Scripset 550 | 0.5% |
| NH₄OH (28%) | 0,6% |
| Dimethylaminoäthanol | 0,1% |
| PEG 200 | 1,8% |
| N(CH₃)₄Cl | 0,4% |
| Na Omadine | 0,3% |
| Duasyn Direct Black HEF-SF VP 332 | 0,8% |
| H₂O (entionisiert) | 95,5% |

Scripset 550 ist ein vor der Firma Monsanto Chemical Co. hergestelltes teilweise verestertes SMA. Duasyn Direct Black HEF-SF VP 332 wird von Hoechst geliefert. PEG200 ist ein von ICI erhältliches Polyäthylenglycol.

Die Druckfarbe wurde zubereitet, indem zunächst das Wasser, Scripset 550 und eine Menge Ammoniumhydroxid, die zur Lösung des in Alkali löslichen Harzes ausreichte, gemischt wurden, und die sich ergebende Mischung auf 70° C gewärmt wurde, bis eine Lösung entstand. Die restlichen Bestandteile wurden dann hinzugegeben und gemischt, bis alle gelöst waren. Die sich ergebende Mischung wurde dann durch ein Filter mit einer Porengröße von 5µ und dann ein Membranfilter von 0,45µ gegeben.

Die Druckfarbe wurde mit der 10µ Hertz-Düse verwendet, um auf einer Agfa-Gevaerl CRAA Aluminiumoxidplatte, die im Ofen auf 95° C vorgewärmt worden war, ein Bild zu erzeugen. Danach wurde dieses Bild 10 Minuten lang bei einer Temperatur von 150° C im Ofen erhitzt.

Die Bildplatte wurde auf einer Offsetdruckmaschine MAN Roland Laborman eingesetzt, um die Drucklauflänge auszuwerten. Die Lauflänge wurde durch eine graphische Aufzeichnung der Änderung im Verhältnis der 30% und 70% Siebe im Vergleich mit dem 100% Sieb bestimmt.

Es wurde festgestellt, daß der Durchmesser der gedruckten Punkte 35µ betrug, während die Lauflänge sich auf 40.000 Abzüge belief.

Um die Bedeutung der Vernetzungsreaktion zur Erzielung einer bedeutenden Lauflänge zu demonstrieren, wurde folgender Vergleichstest durchgeführt, bei dem das mitwirkende Reaktionsmittel für den Maleinanhydridhalbester weggelassen wurde.

### Vergleichsbeispiel:

| | |
|---|---|
| Scripset 550 | 0,5% |
| Dimethylaminoäthanol | 0,1% |
| NH₄OH (28%) | 0,6% |
| N(CH₃)₄Cl | 0,4% |
| Na Omadine | 0,3% |
| Duasyn Direct Black HEF-SF VP332 | 0,8% |
| H₂O (entionisiert) | 97,3% |

Diese Druckfarbe wurde mittels des in Beispiel 1 verwendeten Verfahrens hergestellt und die Vorlage wurde auf ähnliche Weise vorbereitet, mit einer vorgewärmten Aluminiumoxidplatte, die auch 10 Minuten lang bei einer Temperatur von 150° C im Ofen erhitzt wurde. Wieder wurde das Drucken auf einer Druckmaschine Laborman durchgeführt, wobei die Lauflänge lediglich 4.000 Abzüge betrug.

### Beispiel 2:

Eine Agfa CRAA Aluminiumoxidplatte wurde auf einen Zylinder montiert und mittels eines Induktionsgeräts auf 95° C gewärmt. Ein Bild wurde sofort auf die Platte aufgebracht, wobei der Hertz-Tintendrucker und die Druckfarbe aus Beispiel 1 Anwendung fand. Das Bild wurde auf 150° C erhitzt, wieder mittels des Induktionsverfahrens. Die Druckauflänge wurde wie vorstehend bestimmt und betrug 45.000 Abzüge, während die Punktgröße als 35µ gemessen wurde.

### Beispiel 3:

Ein Bild wurde bei Raumtemperatur auf eine Al₂O₃ Keramiktrommel mit der Druckfarbe aus Beispiel 1 aufgebracht. Das Bild wurde dann mittels einer Infrarotlample bei einer Temperatur von 150° C vernetzt. Die Keramiktrommel wurde bei der Druckmaschine Laborman eingesetzt. Die Drucklauflänge wurde als 35.000 bestimmt und der Durchmesser der gedruckten Punkte betrug 40µ.

### Beispiel 4:

| | |
|---|---|
| Gantrez AN 119 | 0,4% |
| Scripset 550 | 0,2% |
| NH₄OH (28%) | 0,6% |
| Triäthanolamin | 0,2% |
| HPPEI 110 | 2,0% |
| NaCl | 0,2% |
| Neosept 95 | 0,1% |
| Special violet S4B-F | 0,5% |
| H₂O (entionisiert) | 95,8% |

Gantrez AN119 ist ein von der Firma International Specialty Products hergestelltes Methylvinylether/Maleinanhydrid-Copolymer.

HPPEI 110 ist ein von der Firma Morton International hergestelltes hydroxypropyliertes Polyäthylenimin.

Special violet S4B-F wird von der Firma Bayer hergestellt.

Die Druckfarbe wurde zubereitet, indem zunächst das Wasser, Scripset 550 und Ammoniumhydroxid gemischt und auf 70° C gewärmt wurden, bis eine Lösung entstand. Das Gantrez AN 119 wurde dann gelöst, danach wurden die restlichen Bestandteile hinzugegeben. Es wurde noch eine Stunde lang gemischt, dann wurde die Lösung durch ein Filter mit einer Porengröße von 5µ und dann ein Membranfilter von 0,45µ gegeben. Der Hertz-Tintendrucker wurde verwendet, um auf einer Agfa CRAA Aluminiumoxidplatte, die im Ofen auf 85° C vorgewärmt worden war, ein Bild zu erzeugen. Das Bild wurde 10 Minuten lang bei einer Temperatur von 130° C im Ofen vernetzt, und danach als Offsetvorlage auf der Druckmaschine Laborman ausgewertet.

Es wurde festgestellt, daß die Lauflänge 65.000 Abzüge und der Durchmesser der gedruckten Punkte 32µ betrugen.

### Beispiel 5:

| | |
|---|---|
| Scripset 550 | 0,5 % |
| NH₄OH (28%) | 0,5% |
| Dimethylaminoäthanol | 0,5% |
| Airvol 325 | 0,5% |
| N(CH₃)₄Cl | 0,4% |
| Na Omadine | 0,3% |
| Duasyn Acid Rhodamine B-SF VP 353 | 0,8% |
| H₂O (entionisiert) | 97,0% |

Airvol 325 ist ein von der Firma Air Products and Chemical hergestellter 98% hydrolysierter Polyvinylalkohol.

Duasyn Acid Rhodoamine wird von der Firma Hoechst geliefert.

Diese Druckfarbe wurde mittels des in Beispiel 1 angegebenen Verfahrens zubereitet. Eine Agfa CRAA Platte wurde mit dem Induktionsgerät auf 90° C gewärmt und ein Bild mit der obengenannten Druckfarbe aufgebracht. Das Induktionswärmeverfahren wurde auch verwendet, um das Bild bei einer Temperatur von 150°C zu vernetzen.

Nach dem Drucken wurde festgestellt, daß die Lauflänge 55.000 Abzüge und der Durchmesser der gedruckten Punkte 35µ betrugen.

### Bespiel 6:

| | |
|---|---|
| Scripset 550 | 0,5% |
| Acrysol 162 | 2,2% |
| NH₄OH (28%) | 1,3% |
| Dimethylaminoäthanol | 0,3% |
| HEPPI 110 | 0,4% |
| N(CH₃)₄Cl | 0,4% |
| Na Omadine | 0,3% |
| Special Violet S₄BF | 0,1% |
| H₂O (entionisiert) | 94,5% |

Acrysol 162 ist ein von der Firma Rohm & Haas hergestelltes Acrylcopolymer mit einem Säurewert von 100 und einem Hydroxylwert von 70. Es wird als 50%ige Wasseremulsion geliefert.

Diese Druckfarbe wurde zubereitet, indem zunächst das Wasser, Ammoniumhydroxid und Acrysol 162 gemischt wurden, bis eine Lösung entstand. Das Scripset 550 wurde dann hinzugegeben, und eine Lösung wurde durch Wärmen auf 70° C erhalten. Die Lösung wurde gekühlt, und danach wurden die restlichen Rohstoffe hinzugegeben und gelöst, indem sie noch eine Stunde lang gemischt wurden. Diese Lösung wurde durch ein Filter mit einer Porengröße von 5µ und dann ein Membranfilter von 0,65µ gegeben. Eine Agfa CRAA Platte wurde mit dein Induktionsgerät auf 90° C vorgewärmt und dann ein Bild mit der obengenannten Druckfarbe erzeugt. Das Induktionswärmeverfahren wurde auch verwendet, um das Bild bei einer Temperatur von 150° C zu vernetzen.

Es wurde festgestellt, daß die Lauflänge 65.000 Abzüge und der Durchmesser der gedruckten Punkte 35µ betrugen.

Die Erfindung ist nicht auf die oben beschriebenen Ausführungsbeispiele beschränkt welche nur als Beispiele angegeben werden und auf verschiedene Weise geändert werden können, ohne den Schutzumfang der nachfolgenden Patentansprüche zu verlassen.

## Patentansprüche

1. Druckfarbenzusammensetzung auf Wasserbasis, zur Bildung einer Offsetdruckvorlage, dadurch gekennzeichnet, daß sie ein erstes, ein zyklisches Anhydrid oder dessen Derivat enthaltendes Polymer, vernetzt mit
einem zweiten, Hydroxylfunktionalität enthaltenden Polymer, zur Bildung der besagten Offsetdruckvorlagenablagerung enthält.

2. Zusammensetzung nach Anspruch 1, dadurch gekennzeichnet, daß das zyklische Anhydrid ein Styrolmaleinanhydrid ist.

3. Zusammensetzung nach Anspruch 1, dadurch gekennzeichnet, daß das zylklische Anhydrid ein Styrolmaleinanhydrid mit teilweise verestertem Anhydrid ist, wobei die Verersterung mit einem niederen Alkohol durchgeführt wurde, ein Styrolmaleinanhydriddinatrium und halb Amid-/halb Ammoniumsalz ist oder ein Methylvinylether/Maleinanhydrid und Methylvinylether/Maleinanhydrid mit teilweise veresterter Anydridgruppe ist, wobei die Veresterung mit einem niederen Alkohol durchgeführt wurde.

4. Zusammensetzung nach Anspruch 1, dadurch gekennzeichnet, daß das zweite, hydroxylhaltige Polymer ein Polyethylenglycol oder ein Polypropylenglycol ist.

5. Zusammensetzung nach Anspruch 1, dadurch gekennzeichnet, daß das zweite , hydroxylhaltige Polymer ein hydroxyalkyliertes Polyäthylenimin ist.

6. Zusammensetzung nach Anspruch 1, dadurch gekennzeichnet, daß das zweite, hydroxylhaltige Polymer ein Polyvinylalkohol ist.

7. Zusammensetzung nach Anspruch 1, dadurch gekennzeichnet, daß das zweite, hydroxylhaltige Polymer ein Acrylpolymer ist, das ein hydroxysubstitutiertes Acrylatmonomer oder Methacrylatmonomer sowie ein Acrylsäuremonomer oder ein Methacrylsäuremonomer enthält.

8. Zusammensetzung nach Anspruch 1, dadurch gekennzeichnet, daß zusätzlich ein Stabilisierungsmittel zugesetzt wurde.

9. Tintendruckverfahren zur Herstellung einer Druckvorlage, dadurch gekennzeichnet, daß auf ein Substrat eine Druckfarbenzusammensetzung, die ein erstes, ein zyklisches Anhydrid oder dessen Derivat enthaltendes Polymer und ein zweites, Hydroxylfunktionalität enthaltendes Polymer umfaßt, in Form von Tröpfchen aufgebracht wird;
und die Druckfarbenzusammensetzung auf dem Substrat zur Bildung der Druckvorlage vernetzt wird.

10. Tintendruckverfahren nach Anspruch 9, dadurch gekennzeichnet, daß das Substrat vor dem Aufbringen der Druckfarbenzusammensetzung in Form von Tröpfchen erwärmt wird, um die Ausbreitung der Tröpfchen auf dem Substrat einzuschränken.

11. Tintendruckverfahren nach Anspruch 10, dadurch gekennzeichnet, daß das Substrat mittels Infrarotlampen oder Induktionswärmeverfahren vorgewärmt wird.

12. Tintendruckverfahren nach Anspruch 9, dadurch gekennzeichnet, daß die Vernetzung durch Anwendung von Wärme durchgeführt wird.

13. Tintendruckverfahren nach Anspruch 12, dadurch gekennzeichnet, daß Wärme in einem Bereich zwischen ca. 70°C und ca. 180°C angewandt wird.

14. Tintendruckverfahren nach Anspruch 12, dadurch gekennzeichnet, daß die Vernetzung durch Anwendung eines thermischen Verfahrens, das aus der aus Wärmeeinstrahlung, Konvektion und Induktion bestehenden Gruppe gewählt wird, durchgeführt wird.

15. Druckvorlage, dadurch gekennzeichnet, daß sie durch das Verfahren nach Anspruch 9 hergestellt wird.

16. Druckvorlage, dadurch gekennzeichnet, daß ein erstes, ein zylindisches Anhydrid oder dessen Derivat enthaltendes Polymer vernetzt mit einem zweiten, Hydroxylfunktionalität enthaltenden Polymer auf ein Substrat aufgebracht werden.

17. Druckfarbenzusammensetzung auf Wasserbasis zur Bildung einer Offsetdruckvorlage nach dem Tintendruckverfahren, dadurch gekennzeichnet, daß sie ein erstes, ein zylindisches Anhydrid oder dessen Derivat enthaltendes Polymer; ein zweites, Hydroxylfunktionalität enthaltendes Polymer das mit dein ersten vernetzbar ist und ein Stabilisierungsmittel enthält.

18. Druckfarbenzusammensetzung nach Anspruch 17, dadurch gekennzeichnet, daß als Stabilisierungsmittel Triäthanolamin, Dimethylammoniumäthanol, Methyldiäthanolamin oder N,N'-Dimethylpiperazin verwendet wird.
